# EUROPÄISCHE PATENTSCHRIFT

(11) **EP 3 708 483 B1**
(45) Veröffentlichungstag und Bekanntmachung des Hinweises auf die Patenterteilung: **15.09.2021**
(21) Anmeldenummer: 19162939.3
(22) Anmeldetag: 14.03.2019
(51) Int. Cl.: B64C 1/06

(54) **HALTEVORRICHTUNG FÜR WANDMODULE**
HOLDING DEVICE FOR WALL MODULES
DISPOSITIF DE MAINTIEN POUR MODULES MURAUX

(43) Veröffentlichungstag der Anmeldung: 16.09.2020
(73) Patentinhaber: SFS Intec Holding AG, 9435 Heerbrugg (CH)
(72) Erfinder: Dibowski, Marc, 21435 Stelle (DE); Diehl, Benjamin, 21224 Rosengarten (DE); Costabel, Sascha, 71131 Jettingen (DE)

(56) Entgegenhaltungen:
- EP-A1- 0 561 107
- DE-A1- 4 208 493
- US-A- 3 142 103
- US-A- 5 680 680
- US-A1- 2014 090 211

## Beschreibung

### TECHNISCHES GEBIET

In der Luftfahrtindustrie werden als Wandverkleidungen für Flugzeugpassagierkabinen häufig Wandmodule verwendet, die an der Innenseite des Flugzeugrumpfes befestigt werden. Die Flugzeughülle des Rumpfes wird dabei aus einem Tragwerk aus Spanten und Stringern (Längsversteifungen) gebildet, das aussen flächig beplankt und innen mittels der vorgehängten Wandmodule verkleidet wird.

Diese Wandmodule sind flächige, in der Regel rechteckige, gewölbte Platten aus möglichst leichten Baumaterialien. Sie werden industriell vorgefertigt und verwenden als Grundmaterial häufig Sandwichplatten mit Wabenkern. Diese Wandmodule haben je nach Auslegung bereits integrierte Öffnungen (z.B. für Fenster) sowie Befestigungspunkte und weisen jene Krümmung auf, die zur Befestigung im Flugzeugrumpf nötig ist. Die Vorderseite, die ins Rumpfinnere weist, ist häufig bereits mit dem gewünschten Oberflächenfinish versehen. Ein Wandmodul erfüllt damit eine sowohl dekorative wie technische Funktion, wirkt geräuschdämmend und wärmeisolierend. Nachteilig ist, dass die Leichtbauweise das Befestigen am Flugzeugrumpf sowie die Verankerung von weiteren Anbauteilen sehr aufwändig macht.

### STAND DER TECHNIK

Das Befestigen solcher Wandmodule erfolgt üblicherweise dadurch, dass das Wandmodul zunächst grob am Flugzeugrumpf ausgerichtet wird. Dann wird ein erster, in der Regel spielfreier Befestigungspunkt festgelegt. Spielfrei meint in dem Zusammenhang, dass er, endfixiert, keine Translationsbewegung zwischen Wandmodul und Rumpf mehr erlaubt. Danach erfolgt die Feinausrichtung des Wandmoduls, in der Regel anhand der Position der Fensteröffnungen, da hier Abweichungen am auffälligsten sind. Ist das Wandmodul um die Wandöffnungen so zentriert wie gewünscht, werden die übrigen Befestigungspunkte fixiert. Dies geschieht häufig über Verschraubungen oder Verriegelungen, die Langlöcher aufweisen, um ein Spiel zwischen Wandmodul und Spanten zu erlauben.

Diese aufwändige Montage ist personalintensiv und zeitaufwändig. Demgegenüber steht der Wunsch, Flugzeuge für Wartung, Reparatur und Umbau nicht unnötig lange am Boden festzuhalten. Für eine Automatisierung der Montage bzw. Demontage z.B. mit Handlinggeräten oder Robotern ist es jedoch nötig, den Befestigungsprozess von Wandmodulen wesentlich zu vereinfachen.

Die vorliegende Erfindung stellt daher eine Haltevorrichtung vor, die statt eines mehrfachen Verschraubungsprozesses an mehreren Befestigungspunkten überwiegend ein System aus zwei verschiedenen Klemmvorrichtungen verwendet. Solche Klemmvorrichtung(en) plus ein Wandmodul werden nachfolgend als eine Anordnung bezeichnet, wie weiter unten näher ausgeführt.

In der Schrift US 2014/00900211 A1 ist eine Klemmvorrichtung mit zwei Scharnierteilen gezeigt, die durch Schwenken um eine gemeinsame Scharnierachse zwischen sich einen Aufnahmeraum bilden. Jede der Scharnierinnenflächen stellt eine Klemmfläche (clamping surface) zur Verfügung. Eine die beiden Scharnierhälften (Klemmbacken) verbindende Schraubverbindung erlaubt eine Verriegelung der Klemmbacken in der klemmenden Endposition.

In der Schrift US5680680 ist eine Haltevorrichtung mit zwei verschiedenen Klammern gezeigt, wobei eine zweite, gabelförmige Klemmvorrichtung um Verriegelung von Außen einer ersten Klemmvorrichtung verwendet wird.

### DARSTELLUNG DER ERFINDUNG

Die Aufgabe der Erfindung wird durch eine Haltevorrichtung mit den Merkmalen des unabhängigen Anspruchs 1 gelöst. Die abhängigen Patentansprüche betreffen bevorzugte Ausführungsformen dieser Haltevorrichtung. Wie vorerwähnt, beruht die erfinderische Haltevorrichtung auf zwei Klemmvorrichtungen, die für die Einbau im Flugzeugrumpf ausgelegt sind und die Befestigung eines Wandmoduls erlauben. Das System ist dabei darauf ausgelegt, ein Wandmodul an seinem oberen und unteren Rand klemmend zu halten. Dabei ist mit diesem "klemmend am oberen und unteren Rand gehalten" nicht gemeint, dass ein Wandmodul ausschliesslich über diese beiden Bereiche dauerhaft in Endposition gehalten werden muss. Es sind weitere Befestigungs- und Sicherungspunkte möglich, die ein Fachmann je nach Anforderung vorsehen wird. Der erfinderische Gedanke zielt vielmehr darauf ab, ein Platzieren und klemmendes Befestigen eines Wandmoduls am vorgesehenen Rumpfabschnitt zu erlauben (sei es manuell, mit einem Handlinggerät oder einem Roboter), und zwar derart, dass dieses Wandmodul vorerst ohne weitere Massnahmen an seinem vorgesehenen Platz bleibt. Unbeschadet dessen können anschliessend weitere Justagen vorgenommen werden oder Sicherungsrahmen bzw. Befestiger angebracht werden, die ein Wandmodul zusätzlich sichern. Diese zusätzlichen Sicherungen dienen aber nur der Ergänzung, nicht dem Ersatz der Klemmung. Das beschriebene erfinderische System ist also keine ausschliesslich temporäre Halterung.

Die Begriffe oben, unten, links und rechts beziehen sich auf ein Wandmodul in Einbaulage in einem Flugzeugrumpf. Ein Flugzeugrumpf wird dabei als die im Querschnitt üblicherweise kreisförmige bis ellipsenförmig gebaute Flugzeughülle angenommen, die aus einem Tragwerk aus Spanten (kreisförmige bzw. ellipsoide Ringsegmente) und Stringern (Längsträgern oder Versteifungen) besteht und auf der Aussenseite beplankt ist. Die Innenseite des Rumpfes ist die Kabinenseite, ein Wandmodul weist im verbauten Zustand also folgerichtig mit seiner Rückseite zur Innenseite des Rumpfes. Die Ober- bzw. Unterkante des Wandmoduls bezeichnet im Folgenden nicht den Rand im mathematischen Sinn, sondern einen Randbereich, der üblicherweise wenige Millimeter bis Zentimeter breit ist. Da ein Flugzeug enormen Temperaturschwankungen ausgesetzt ist, müssen die Wandmodule und der Flugzeugrumpf aus (üblicherweise) Aluminium und/oder CFK mit Spiel miteinander verbunden werden. Dies geschieht, indem einzelne Wandmodule beabstandet zueinander angebracht werden und die Zwischenräume mit Abdeckleisten verkleidet werden.

Die erste der beiden Klemmvorrichtungen 30 der Haltevorrichtung umfasst einen Klemmenkörper 33 mit einer ersten, relativ zum Klemmenkörper fixen Klemmbacke 31 und einer zweiten, relativ zum Klemmenkörper 33 beweglichen Klemmbacke 32. Mit Klemmenkörper ist dabei ein Verbindungselement gemeint, das einerseits den Klemmechnismus aufnimmt und auch Verbindungspunkte aufweist, um den Klemmenkörper an einem Spant oder Stringer anzubringen. Da diese Befestigung zwischen Klemmenkörper und Rumpf nicht erfindungswesentlich ist, wird nicht näher auf sie eingegangen. Sie kann im Ermessen eines Fachmanns ausgelegt werden. Bevorzugt wird die Beweglichkeit der Klemmbacke 32 realisiert, indem die bewegliche Klemmbacke 32 über eine Schwenkachse 34 beweglich am Klemmenkörper 33 gelagert wird. Die Dreh/Schwenkbewegung um die Achse 34 bewirkt so den Wechsel zwischen den Zuständen "geschlossen" und "offen".

Die bewegliche Klemmbacke 32 ist mit einem Betätigungshebel 35 wirkverbunden bzw. verbindbar. Der Hebel kann so ausgelegt (dauerhaft wirkverbunden) sein, dass ein Öffnen bzw. Schliessen der beweglichen Klemmbacke (32) erzielt werden kann. Alternativ kann der Betätigungshebel 35 auch als Halteelement, Raste, Riegel, Klemmung, Klinke ausgelegt werden, was, nur temporär mit der Klemmbacke 32 verbunden, die Klemmvorrichtung im Zustand "offen" fixiert. Im Zustand "offen" kann ein Wandmodul 10 in die Klemmvorrichtung 30 eingebracht oder aus ihr entnommen werden. Im Zustand "geschlossen" bilden die Klemmbacken 31, 32 einen Aufnahmeraum 36 (also einen von den Klemmbackenoberflächen begrenzten Zwischenraum) für ein Wandmodul 10 bzw. dessen Oberkante 15. Dieser Aufnahmeraum 36 weist weiterhin eine Verriegelung 37 auf, die im Zustand "geschlossen" die Position der Klemmbacken 31, 32 zueinander fixiert und somit das Wandmodul klemmend festhält.

In einer ersten Ausführungsform kann die Klemmbacke 32 manuell durch eine Schwenkbewegung um die Achse 34 in den Zustand "offen" gebracht werden. Hierbei rastet der Bolzen 48 der beweglichen Klemmbacke 32 in eine Aufnahme 49 des Betätigungshebels 35 ein und fixiert somit die Klemmbacke 32. Der Betätigungshebel 35 besteht in dieser Ausführungsform damit aus einem um eine federbelastete Achse schwenkbaren Ober - und einem Unterarm 50, 51. Der Oberarm 50 trägt die Aufnahme 49, der Unterarm 51 kann als Löseelement ausgebildet werden. Beim Einsetzen des Wandmoduls 10 wird durch Anlegen der Rückseite 17 des Wandmoduls 10 der Unterarm 51 betätigt, woraufhin die Aufnahme 49 am Oberarm 50 den Bolzen 48 freigibt. Dadurch wird die bewegliche Klemmbacke 32 gelöst und kann durch eine Schwenkbewegung (manuell, Drehfeder) in den Zustand "geschlossen" gebracht werden. Im Zustand "geschlossen" werden dann zusätzlich über die Verriegelung 37 die Klemmbacken 31, 32 gesichert.

Vorteilhafterweise weist eine solche Klemmvorrichtung 30 Dämpfungselemente 43, 44 auf, die an den dem Aufnahmeraum 36 zugewandten Fläche(n) der Klemmbacken 31, 32 angebracht sind. Dadurch wird ein Wandmodul masstolerant elastisch gehalten, ohne dass die Klemmbacken direkt mechanisch auf das Wandmodul einwirken.

Die angesprochene Verriegelung 37 kann auf vielfältige Weise ausgelegt werden. Vorgeschlagen werden eine Klemm-, Rast-, Schnapp- oder Sperrvorrichtung 40 einerseits mit einem Riegel, einem Dorn 46 oder einer Klinke andererseits. Diese Elemente werden jeweils an einer der Klemmbacken 31, 32 so positioniert, dass sie im Zustand "geschlossen" verriegelnd ineinander greifen können. Die Klemmvorrichtung kann entsperrt werden, indem an der Verriegelung 37 ferner ein Lösemechanismus 47 vorgesehen wird. Dies kann ein Zughebel für einen Sicherungsstift sein, ein Entfernen oder Abhebeln einer Sperrfeder oder ein ähnliches, taugliches Mittel.

In einer zweiten Ausführungsform überträgt der dauerhaft wirkverbundenen Betätigungshebel 35 seine Schwenkbewegung um die Achse 34 auf die bewegliche Klemmbacke 32 und erlaubt den Wechsel zwischen dem Zustand "geschlossen" und "offen". Im Zustand "geschlossen" kann dann zusätzlich verriegelt werden, wonach der Betätigungshebel 35 entlastet werden kann; die Klemmvorrichtung verbleibt in der gesicherten Endposition. Es können weitere Massnahmen vorgesehen werden, um den Verbund aus beweglicher Klemmbacke 32 und Betätigungshebel 35 in (einer) weitere(n) definierte(n) Position(en) zu halten. So kann vorteilhafterweise vorgesehen werden, dass die Position "offen" ebenfalls in definierter Lage erfolgt. Dies könnte durch ein weiteres Halte- oder Klemmelement gelöst werden oder dadurch, dass der Hebel durch sein Eigengewicht die Position "offen" hält.

Neben dem hier geschilderten Hebelmechanismus mit einer (Dreh-)Schwenkachse 34 wäre auch ein Abheben und paralleles Wegklappen der beweglichen Klemmbacke 32 mit Hilfe zweier Schwenkhebel ohne eine Drehachse äquivalent realisierbar (Parallelogrammführung). Die Verriegelung 37 könnte dabei denselben Vorgaben folgen wie oben beschrieben. Weiterhin könnte die Sicherung in der Position "geschlossen" auch durch Federkraft erfolgen. Bevorzugt ist jedoch eine dezidierte Verriegelung 37, weil sich so z.B. auch eine Überprüfung der Verriegelung etablieren lässt, z.B. durch mechanische Anzeiger oder Sensoren.

Vorteilhafterweise werden an der Aussenseite 38 der beweglichen Klemmbacke 32 Befestigungspunkte vorgesehen. Diese sind an der vom Aufnahmeraum wegweisenden Aussenseite 38 angebracht; jene Seite, die im verbauten Zustand zum Kabinneninneren weist. Die Befestigungspunkte können Gewindebohrungen, Stifte oder Klebepunkte sein, die ein Anbringen von Elementen an der Aussenseite der Klemmbacke erlauben.

Eine Haltevorrichtung für ein Wandmodul 10 umfasst neben mindestens einer ersten Klemmvorrichtung 30 nach obiger Beschreibung mindestens eine zweite Klemmvorrichtung 20, die erfindungsgemäss mit zwei fixen Klemmbacken 21, 22 ausgestattet ist, um das Wandmodul 10 an einer anderen Stelle bzw. Kante klemmend zu halten. Im Querschnitt betrachtet weist die zweite Klemmvorrichtung 20 ein gabelförmiges Querschnittsprofil auf mit zwei Klemmbacken 21, 22, die die Zinken der Gabel bilden. Die Zinken sind durch einen Haltesteg 23 verbunden, der im Raum zwischen den Zinken eine Hohlkehle 25 ausbildet. Fix steht hierbei für die übliche Bedeutung "unbeweglich" relativ zu einem Grundkörper, hier zum Haltesteg 23.

Elemente aus den beiden Klemmvorrichtungen 20 und 30 sowie einem Wandmodul 10 bilden eine Anordnung. Das Wandmodul ist typisch als plattenförmig und im Wesentlichen flach bzw. gewölbt charakterisiert, wie es als Element der Kabineninnenverkleidung einer Flugzeugkabine Verwendung findet. Üblicherweise wird das Wandmodul 10 so beschrieben, dass seine Rückseite 17 der Flugzeugrumpf-Innenwand 11 zugewandt wird und die Vorderseite 12 dem Kabineninneren zugewendet wird (Passagierraum). Die Unterkante 13 des Wandmoduls 10 weist somit zum Kabinenboden 14 und die Oberkante 15 zur Kabinendecke.

Die Klemmelemente sind üblicherweise als diskrete Bauteile vorgesehen, befestigen also das Wandmodul punktuell bzw. abschnittsweise; dies vor allem um Gewicht zu sparen. Jedoch können vorteilhaft mindestens zwei erste Klemmvorrichtungen 30, 30' durch ein oder mehrere Verbindungselement(e) 45 miteinander so verbunden werden, dass mehrere Klemmvorrichtungen 30, 30' gemeinsam betätigt werden können. Diese Verbindungselemente 45 können über die an der Aussenseite 38 vorgesehenen Befestigungspunkte mit der Klemmbacke verbunden werden. Das Verbindungselement kann vorteilhafterweise auch flächig als eine Abdeckleiste ausgeführt werden oder eine Abdeckleiste aufnehmen. Damit entsteht eine Abdeckklappe, die neben der Klemm-Halterung auch die Funktion der Randabdeckung übernehmen kann. Bei Bedarf kann die Abdeckleiste die Klemmvorrichtung so überragen, dass die Klemmvorrichtung nach Endmontage der Innenverkleidung unsichtbar bleibt. Aus praktischen Gründen kann auch die Abdeckleiste so ausgeführt werden, dass sie Flächenbereiche aufweist, die die Funktionalität der Klemmbacke 32 zur Verfügung stellen. Zusammengefasst, mit anderen Worten: Die Klemmbacke 32 kann Teil einer entsprechend aufgebauten Abdeckleiste sein bzw. die Abdeckleiste ein Aufbauteil zu einer oder mehreren Klemmvorrichtungen 30, 30'.

In einer besonders bevorzugten Ausführung kann das Verbindungselement bzw. die Abdeckleiste Beleuchtungselemente oder Informationsmittel wie Displays, Signets, beleuchtete Hinweis- oder Warnzeichen aufweisen. Damit lassen sich Informationen wie Platznummern, Anschlussflüge oder Fluchtwege signalisieren. Rüstet man solche Displays berührungsempfindlich aus, lassen sich auch interaktive Bedienungselemente realisieren (Ruffunktion, Lichtschalter, Bedienelemente für Entertainmentsysteme etc.)

Die Baulage der zweiten Klemmvorrichtung 20 ist vorgesehen wie folgt: Im montierten Zustand im Flugzeugrumpf weist eine (hintere) Klemmbacke 21 zur Innenwand 11 und die andere (vordere) Klemmbacke 22 zum Kabineninneren. Das Wandmodul 10 kann auf seiner Rückseite ein (oder mehrere) Halterelement(e) 26 aufweisen mit einer Unterkante 13'. Je nach Auslegung werden diese Unterkante 13' des Halterelementes 26 oder die Unterkante 13 des Wandmoduls 10 selbst nach der Montage zwischen den beiden Klemmbacken 21, 22 klemmend eingespannt gehalten. Bevorzugt umfasst eine Unterkante 13, 13' (integrierte) elastische Elemente (Vibrationsdämpfer), welche sowohl der Vorder- wie der Rückseite vorstehen und so im montierten Zustand im Kontakt mit den Klemmbacken 21, 22 einen Teil der Klemmkraft elastisch aufnehmen. Ähnlich wie bei dem Klemmechanismus für die erste Klemmvorrichtung 30, wird durch die elastischen Elemente vermieden, dass Vibrationen vom Flugzeugrumpf auf das Wandmodul 10 übertragen werden oder es zu anderen unerwünschten Geräuschen kommt.

Die zweite Klemmvorrichtung 20 kann bevorzugt als (Strang-)Profilelement ausgeführt werden. Während die Klemmvorrichtung 30 wegen der Mechanik der beweglichen Klemmbacken bevorzugt als diskretes Bauteil ausgeführt wird, kann es bei der zweiten Klemmvorrichtung vorteilhaft sein, diese als Profilelemente in Segmenten bündig aneinander zur montieren, so dass die Hohlkehle 25 längsausgedehnt zwischen den Klemmbacken 21, 22 ausbildet ist. Auch eine einstückige Ausführung ist möglich. Denkbar ist ebenfalls, die zweite Klemmvorrichtung in ein Halteelement bzw. das seitliche Abschlusselement des Kabinenbodens 14 zu integrieren.

Um die Stabilität der Befestigung des Wandelementes im montierten Zustand weiter zu verbessern, ist es vorteilhaft in der Hohlkehle 25 zwischen den Klemmbacken 21, 22 ein Anschlagelement anzubringen, das die Bewegung eines Wandmoduls 10 entlang der Längserstreckung der zweiten Klemmvorrichtung 20 begrenzt.

Die Montage eines Wandelements auf Basis der Erfindung kann manuell erfolgen oder mit Hilfe eines Montageroboters oder Handlingssystems folgendermassen durchgeführt werden: In einem Rumpfabschnitt einer Flugzeugkabine sind an geeigneten Stellen eine Mehrzahl von ersten Klemmvorrichtungen 30 an Spanten bzw. Stringern befestigt, z.B. oberhalb von vorgesehenen Fensteröffnungen. Weiterhin werden zweite Klemmvorrichtungen 20 seitlich am Rumpf befestigt, etwa in der Einbaulage des (geplanten) Fussbodenniveaus. Die ersten Klemmvorrichtungen 30, 30' können mit Verbindungselementen 45 miteinander verbunden sein und die vorbeschriebenen Klappen / Abdeckelemente aufweisen. Die Klemmvorrichtungen 30, 30' werden manuell oder durch ein Handlingsystem in den Zustand "offen" versetzt, indem der bzw. die Betätigungshebel 35, 35' entsprechend verwendet werden.

Daraufhin werden Wandmodul(e) 10 bereitgestellt. Mit Hilfe beispielsweise eines Werkzeugs kann ein Wandmodul 10 auf seiner Vorderseite 12 oder an den Kanten gehalten, gehoben und in Position gebracht werden. Dies kann z.B. durch Greifwerkzeuge geschehen oder Vakuumhalterungen. Das Wandmodul wird nun von oben bzw. schräg von vorn in die zweite Klemmvorrichtung eingeführt, so dass die Unterkante 13 bzw. 13' zwischen den der Hohlkehle zugewandten Innenseiten der Klemmbacken 21, 22 gehalten wird. Um das Einführen zu erleichteren, ist es vorteilhaft, den Innenabstand der Klemmbacken 21, 22 zueinander am offenen Backenende enger zu wählen als im Bereich der Hohlkehle, also dort, wo die Klemmbacken in den Haltesteg 23 übergehen. Dadurch entsteht ein Spielraum, der ein Kippen des Wandmoduls mit der Rückseite 17 hin zur Innenwand 11 des Rumpfs erlaubt, ohne das Wandmodul 10 an seiner Unterkante auf Bruch zu belasten. Die Achse der Kippbewegung liegt dabei im Bereich der Unterkante 13 zwischen den Klemmbacken 21, 22 der zweiten Klemmvorrichtung.

Anschliessend kann das Wandmodul 10 an der Innenwand 11 des Rumpfes ausgerichtet werden, bis die Oberkante 15 an der Klemmbackenfläche 41 (bzw. dem hinteren Dämpfungselement 43) der fixen Klemmbacke 31 anschlägt. Anschliessend können (kann) die bewegliche(n) Klemmbacke(n) in die Position "geschlossen" gebracht werden. Ist die Verriegelung 37 als Schnapp- oder automatische Rastvorrichtung gestaltet, wird die Halterung des Wandmoduls dadurch abgeschlossen.

Das Schliessen der beweglichen Klemmbacke 32 und das Verriegeln kann durch eine Betätigungsvorrichtung am Roboterarm bzw. der Transporthalterung für das Wandmodul erfolgen oder manuell durch einen Bediener.

Eine Demontage könnte in weitgehend umgekehrter Reihenfolge vorgenommen werden, indem zunächst alle Haltelemente bis auf die ersten und zweiten Klemmvorrichtungen 30, 20 entfernt werden. Danach würde das Wandmodul erfasst, die Verriegelung 37 gelöst und die bewegliche(n) Klemmbacke(n) 31, 31' in die Position "offen" gebracht. Das Wandmodul wird von der Rumpfwand weg etwas in Richtung Kabineninnenseite verschwenkt, wobei die Unterkante 13 die Achse der Schwenkbewegung in der zweiten Klemmvorrichtung 20 bildet. Dann kann das Wandmodul aus der gabelförmigen zweiten Klemmvorrichtung 20 ausgehoben werden und beispielsweise auf ein Transportgestell abgelegt werden.

Dieses Halterungsprinzip ist nicht auf Flugzeugkabinen bzw. deren Wandelemente beschränkt, sondern auch für andere Verkehrsmittel verwendbar, bei denen Wandmodule manuell, mit Handlingsystemen oder mit Robotern ein- und ausgebaut werden müssen.

Die Materialien, aus denen die beschriebenen Bauteile herstellbar sind, orientieren sich an den im Flugzeugbau zugelassenen Stoffen, deren Auswahl und Design durch die berechneten bzw. gemessenen Lasten und Kräfte bestimmt wird. So werden üblicherweise Aluminium, aber auch Kunststoffe sowie Leichtbauverbundwerkstoffe wie GFK, CFK oder Kombinationen hiervon zum Einsatz kommen.

### KURZBEZEICHNUNG DER FIGUREN

Figur 1 zeigt ein einzelnes Wandmodul 10 klemmend befestigt an der Innenstruktur eines Rumpfabschnitts.
Figur 2a zeigt eine erste Klemmvorrichtung 30 in seitlicher Draufsicht.
Figuren 2b bis d zeigen eine Variante der ersten Klemmvorrichtung 30.
Figur 3 zeigt eine Schrägansicht auf eine erste Klemmvorrichtung 30 unter Weglassung der beweglichen Klemmbacke 32 und des Betätigungshebels 35.
Figur 4 zeigt eine Draufsicht auf eine bewegliche Klemmbacke 32 integral ausgeführt mit dem Verbindungselement 45.
Figur 5a zeigt im seitlichen Schnitt eine zweite Klemmvorrichtung 20.
Figur 5b zeigt in Schrägansicht eine zweite Klemmvorrichtung 20, ähnlich Figur 5a.
Figuren 5c und 5d zeigen alternative Ausführungen der zweiten Klemmvorrichtung 20.

### BESCHREIBUNG DER FIGUREN

Die nachfolgende Beschreibung der Figuren bezeiht sich auf die vorteilhafte Ausführungen in den Figuren. Unter dem Blickwinkel der generellen Beschreibung oben bzw. durch die Formulierung der Ansprüche ergeben sich weitere, äquivalente Ausführungen. Die Zeichnungen sind daher nicht limitierend zu verstehen.

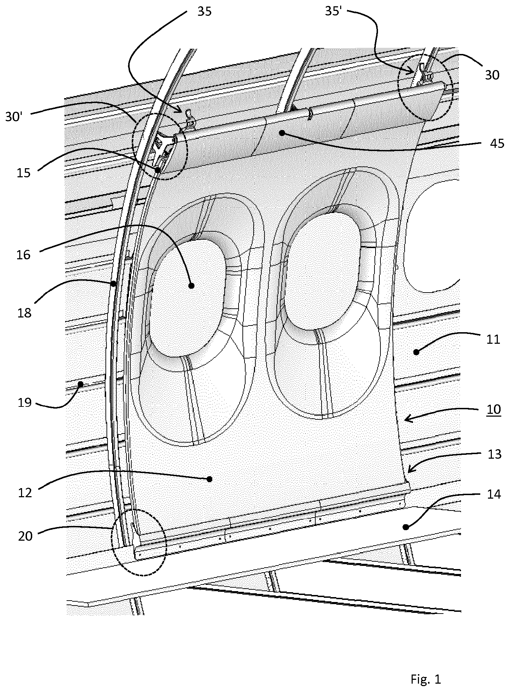

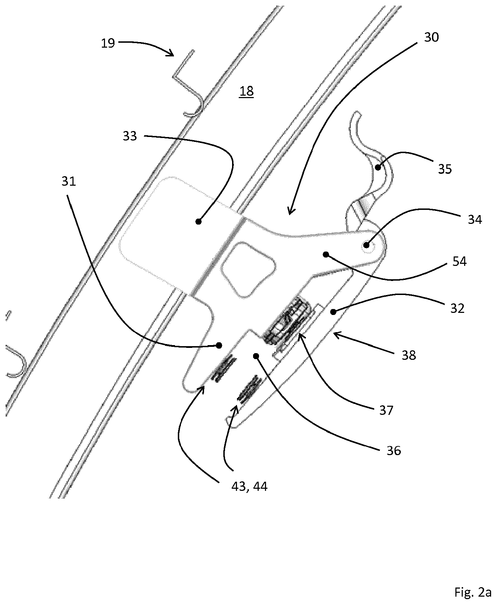

Figur 1 zeigt ein verbautes Wandmodul 10 an der Innenwand 11 eines Flugzeugrumpfs. Dieser ist mit Spanten 18, Stringern 19 und Teilen der Beplankung angedeutet. Die Vorderseite 12 des Wandmoduls 10 weist zum Kabinneninneren und weist bereits eine Oberfläche mit Öffnungen für Fenster 16 auf. Die Unterkante 13 des Wandmoduls 10 ist in der nahe dem Kabinenboden 14 angebrachten, zweiten Klemmvorrichtung 20 klemmend gehalten. Die Oberkante 15 wird von der bzw. den ersten Klemmvorrichtung(en) 30, 30' gehalten. Das Verbindungselement 45 zwischen den Klemmvorrichtungen 30, 30' ist so gestaltet, dass es als Abdeckleiste bzw. Klappenelement wirkt. Figur 2a zeigt in Seitenansicht eine an einem Spant 18 angebrachte Klemmvorrichtung 30, wobei die physische Verbindung über den Klemmenkörper 33 efolgt. Ein Stringer 19 ist angedeutet. Die fixe Klemmbacke 31 ist als ein integral am Klemmenkörper 33 angebrachtes Bauteil gezeigt. Die zweite, bewegliche Klemmbacke 32 ist hier in der Position "geschlossen" gezeigt. In der Figur ist das Wandmodul 10 weggelassen, der Aufnahmeraum 36 ist daher leer. Wie erkennbar ist, ragen die Dämpfungselemente 43, 44 in den Aufnahmeraum 36 hinein. Sie würden das Wandmodul 10 zwischen sich elastisch klemmen. Die bewegliche Klemmbacke 32 ist hier als eines, auch einstückig mögliches, Bauteil mit dem Betätigungshebel 35 gezeigt. Die Schwenkachse 34 ist an einem Ausleger, dem Achsträger 54 angeordnet. Dadurch ist zwischen den Klemmbacken 31 und 32 auch Raum geschaffen für die Verriegelung 37. Mit 38 ist die Aussenseite der beweglichen Klemmbacke 32 bezeichnet, die als Teil des Verbindungselementes 45 ausgelegt sein kann und Aufnahmepunkte bzw. Befestigunsgpunkte für funktionale Elemente aufweisen kann.

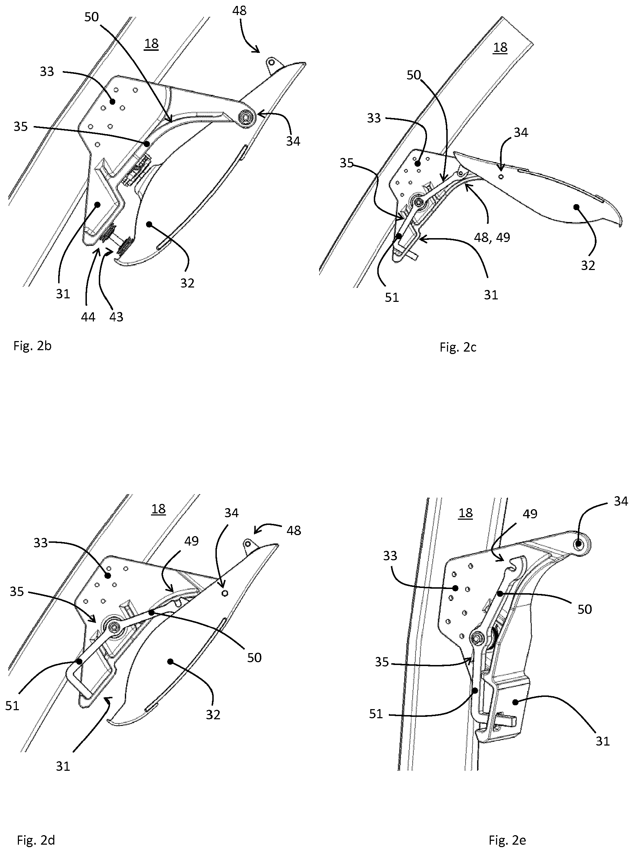

Die Figuren 2b bis e zeigen eine funktionell ähnliche Klemmvorrichtung 30 mit einem anderen Funktionsprinzip des Betätigungshebels 35. Die Bauteilebezeichnung ist grundsätzlich wie bei Figur 2a. Die Klemmbacke 32 ist als flächiges Bauteil nach Art einer Abdeckleiste gezeigt. An ihrem dem Klemmbackenbereich entfernt liegenden Ende ist ein Bolzen 48 angebracht, der Teil einer Offenhaltevorrichtung ist. Der Betätigungshebel öffnet und schliesst die Klemmbacke nicht direkt, sondern wird tätig im Zustand "offen". Figur 2b zeigt den Zustand "geschlossen" ohne ein Wandmodul 10 zwischen den durch Dämpfungselemente 44, 45 eingefassten Klemmbacken 31, 32.

Figur 2c zeigt den Zustand "offen", gehalten durch das Einrasten des Bolzens 48 in den Aufnehmer 49 des Betätigungshebels 35. In der gezeigten Ausführung ist der Aufnehmer 49 am einen Ende des Betätigungshebels 35, dem Oberarm 50 angebracht. Die untere Hälfte ist als Unterarm 51 markiert und wird in der gezeigten Ausführung als Auslöser benutzt.

Figur 2d zeigt die Anordnung des Betätigungshebels bei dieser Ausführungsform etwas genauer. Sichtbar ist auch die Drehlagerung zwischen Oberarm 50 und Unteram 51. Figur 2e ist eine Schrägaufsicht ohne bewegliche Klemmbacke 32. Der Unterarm 51 des Betätigungshebels 35 ragt in den Aufnahmeraum 36 vor und würde durch ein an die fixe Klemmbacke 31 anlehndens Wandmodul zurückgedrückt. Dadurch würde der Aufnehmer 49 den Bolzen 48 freigeben und die um das Lager 34 (Drehachse) bewegliche Klemmbacke 32 bzw. Abdeckleiste kann sich vom Zustand "offen" zu "geschlossen" bewegen.

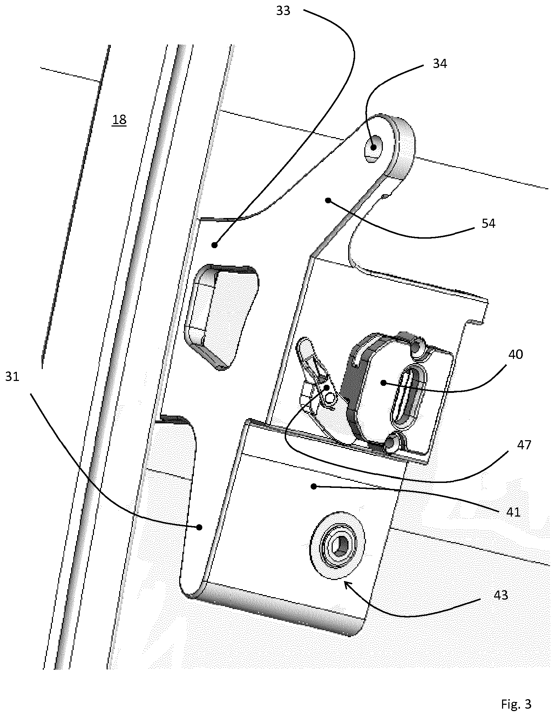

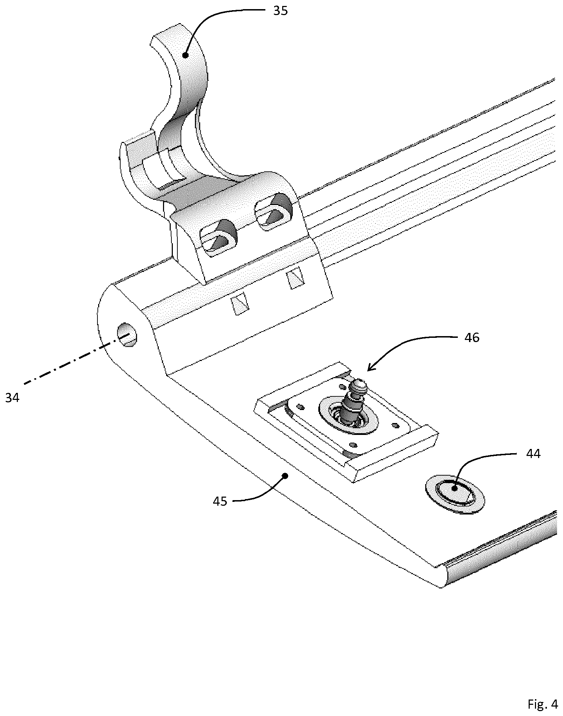

Figur 3 zeigt eine Klemmvorrichtung 30 ähnlich Figur 2a ohne die bewegliche Klemmbacke 32. Der Klemmenkörper ist einerseits am Spant 18 befestigt und geht andererseits in den Achsträger 54 (mit der Aufnahme 39 für die Schwenkachse) über und die fixe Klemmbacke 31. Deren Klemmbackenfläche 41 definiert eine (hintere) Begrenzungsfläche des vorhin gezeigten Aufnahmeraums 36 und nimmt das hintere Dämpfungselement 43 auf. Ebenfalls im Raum zwischen den Backen angeordnet ist die Sperrvorrichtung 40 als Teil der Verriegelung 37. Hier ist die Aufnahme für einen (Verriegelungs-)Dorn 46 (s. Fig. 4) gezeigt. Ein Lösemechanismus 47 erlaubt die Entriegelung der Sperrvorrichtung 40.

Figur 4 zeigt die Ansicht einer beweglichen Klemmbacke 32 als integraler Bestandteil eines Verbindungselements 45 / Abdeckung, ausgeführt als plattenförmiges Klappenbauteil. Die Lage von Schwenkachse 34 und Betätigungshebel 35 zeigen, dass die Blickrichtung auf die Innenseite der Klemmvorrichtung 30 gerichtet ist. Das vordere Dämpfungselement 44 ist das technische Pendant zu dem Dämpfungselement 43 aus Figur 3. Der (Verriegelungs-) Dorn 46 ist zur Aufnahme in der Sperrvorrichtung 40 vorgesehen und ergänzt diese zur Verriegelung 37.

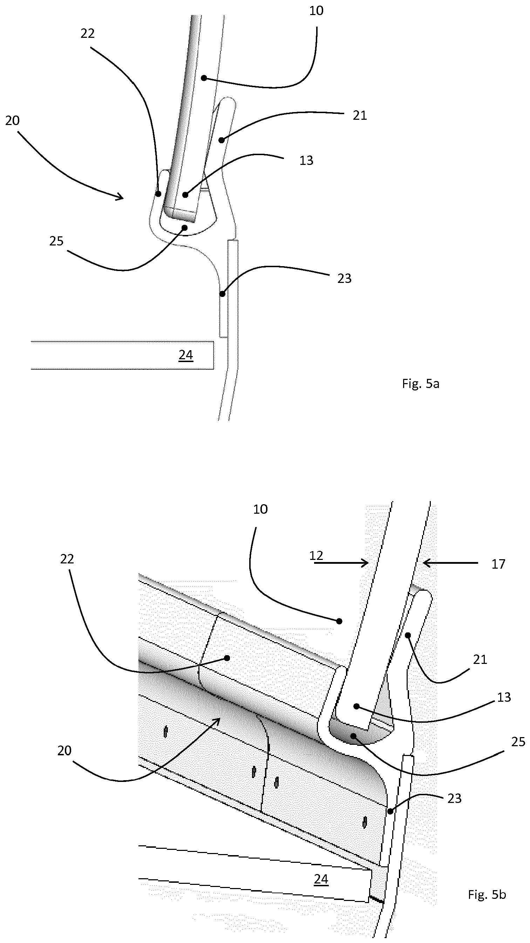

Die Figuren 5a und 5b zeigen, einmal im Schnitt und in Schrägansicht, wie ein Wandelement 10 an seiner Unterkante 13 in der zweiten Klemmvorrichtung 20 gehalten ist. Die hier gezeigte Ausführug zeigt eine vom Bodenelement 24 aus betrachtet, hochgezogene (ausladendere) hintere Klemmbacke 21. Dies dient der Erleichterung bei der Montage bzw. Demontage, weil so eine Gleitfläche für die Rückseite 17 des Wandmoduls 10 beim Ein- bzw. Ausbau geschaffen wird. Die vordere Klemmbacke 22 ist über den Haltesteg 23 mit der hinteren Klemmbacke verbunden, die dazwischen geschaffene Hohlkehle 25 ist in beiden Figuren deutlich. Die Klemmung erfolgt für die Vorderseite 12 also an der vorderen Klemmbacke 22 und für die Rückseite 17 durch die hintere Klemmbacke 21. An der Unterkante 13 mögliche elastische Dämpfungselemente sind in Fig. 5a/b nicht gezeigt.

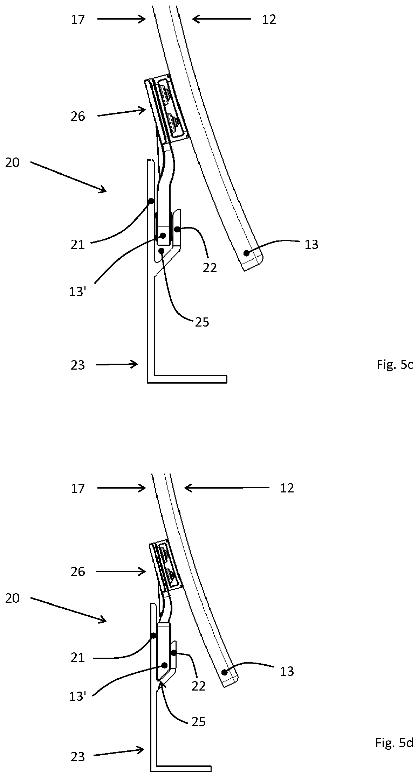

Die Figuren 5c und 5d zeigen eine alternative, verdeckte Klemmbefestigung. Hier wird nicht die Unterkante 13 des Wandmoduls selbst, sondern die Unterkante 13' eines Halterelementes 26 zwischen den Klemmbacken 21 und 22 geklemmt. Die Halterung 26 ist an der Rückseite des Wandmoduls 10 (optional mit Dämpfungselementen) befestigt und leitet das Eigengewicht des Wandmoduls in die Klemmvorrichtung 20 ab. Wie in Figur 5d gezeigt, kann die Unterkante auch formschlüssig ausgeführt werden, sodass sie den Raum zwischen den Klemmbacken 21, 22 und die Hohlkehle 25 ausfüllt.

## Patentansprüche

1. Haltevorrichtung für ein plattenförmiges, flaches Wandmodul (10) umfassend mindestens eine erste Klemmvorrichtung (30) und mindestens eine zweite Klemmvorrichtung (20), wobei die erste Klemmvorrichtung (30) einen Klemmenkörper (33) umfasst
• mit einer ersten, relativ zum Klemmenkörper fixen Klemmbacke (31);
• einer zweiten, relativ zum Klemmenkörper (33) beweglichen Klemmbacke (32), die wiederum mit einem Betätigungshebel (35)
- zum Öffnen und Schliessen der beweglichen Klemmbacke (32) dauerhaft wirkverbunden ist, oder
- temporär so verbunden werden kann, dass die Klemmvorrichtung (30) im Zustand "offen" gehalten wird; und
- wobei im Zustand "geschlossen" die Klemmbacken (31, 32) einen Aufnahmeraum (36) ausbilden für das Wandmodul (10)
- und der Aufnahmeraum (36) weiter eine Verriegelung (37) aufweist, die im Zustand "geschlossen" die Position der Klemmbacken (31, 32) zueinander fixiert,
**dadurch gekennzeichnet, dass** die zweite Klemmvorrichtung (20) ein gabelförmiges Querschnittsprofil aufweist mit zwei fixen Klemmbacken (21, 22), einer dazwischen ausgebildeten Hohlkehle (25) und einem Haltesteg (23).

2. Haltevorrichtung nach Anspruch 1, **dadurch gekennzeichnet, dass** die Klemmbacken (31, 32) der ersten Klemmvorrichtung (30) auf ihrer dem Aufnahmeraum (36) zugewandten Fläche über Dämpfungselemente (43, 44) verfügen.

3. Haltevorrichtung nach Anspruch 1-2, **dadurch gekennzeichnet, dass** die Verriegelung (37) der ersten Klemmvorrichtung (30) eine Klemm-, Rast-, Schnapp- oder Sperrvorrichtung (40) einerseits und einen Riegel, einen Dorn (46) oder Klinke andererseits umfasst, die jeweils an einer der Klemmbacken (31, 32) so positioniert sind, dass sie im Zustand "geschlossen" verriegelnd ineinander greifen.

4. Haltevorrichtung nach Anspruch 1-3, **dadurch gekennzeichnet, dass** die Verriegelung (37) der ersten Klemmvorrichtung (30) ferner einen Lösemechanismus (47) aufweist.

5. Haltevorrichtung nach Anspruch 1-4, **dadurch gekennzeichnet, dass** die bewegliche Klemmbacke (32) der ersten Klemmvorrichtung (30) über eine Schwenkachse (34) drehbeweglich am Klemmenkörper (33) gelagert ist.

6. Haltevorrichtung nach Anspruch 1-5, **dadurch gekennzeichnet, dass** die bewegliche Klemmbacke (32) der ersten Klemmvorrichtung (30) an ihrer vom Aufnahmeraum wegweisenden Aussenseite (38) Befestigungspunkte aufweist zum Anbringen von Elementen an der Aussenseite der Klemmbacke.

7. Anordnung umfassend einen Flugzeugrumpf, der eine Flugzeugrumpfinnenwand (11) aufweist, und eine Flugzeugkabine mit einem Kabineninneren, das einen Kabinenboden (14), eine Kabinendecke und eine Kabineninnenverkleidung aufweist, die Anordnung bestehend aus einem plattenförmigen, flachen Wandmodul (10) der Kabineninnenverkleidung der Flugzeugkabine und einer Haltevorrichtung nach Anspruch 1-6, **wobei** das Wandmodul (10) eine der Flugzeugrumpf-Innenwand (11) zugewandte Rückseite (17) und eine dem Kabineninneren zugewandte Vorderseite (12) aufweist und eine Unterkante (13) des Wandmoduls (10) zum Kabinenboden (14) weist und eine Oberkante (15) zur Kabinendecke zeigt.

8. Anordnung nach Anspruch 7, **dadurch gekennzeichnet, dass** mindestens zwei erste Klemmvorrichtungen (30, 30') durch ein Verbindungselement (45) miteinander so verbunden sind, dass die Klemmvorrichtungen (30, 30') gemeinsam betätigt werden können.

9. Anordnung nach Anspruch 8, **dadurch gekennzeichnet, dass** das Verbindungselement eine Abdeckleiste darstellt oder aufnimmt, die Beleuchtungselemente oder Informationsmittel wie Displays, Signets, beleuchtete Hinweis- oder Warnzeichen aufweist.

10. Anordnung nach Anspruch 7-9, **dadurch gekennzeichnet, dass** die zweite Klemmvorrichtung (20) so ausgelegt ist, dass im montierten Zustand der Anordnung im Flugzeugrumpf eine Klemmbacke (21) zur Flugzeugrumpfinnenwand (11) und die andere Klemmbacke (22) zum Kabineninneren weist, wobei die Unterkante (13) des Wandelementes (10) oder die Unterkante (13') eines an der Rückseite (17) angebrachten Halterelements (26) nach der Montage zwischen den beiden Klemmbacken (21, 22) klemmend eingespannt gehalten wird.

11. Anordnung nach Anspruch 10, **dadurch gekennzeichnet, dass** die Unterkante (13, 13') des Wandmoduls (10) bzw. des Halterelements (26) elastische Elemente umfasst, welche sowohl der Vorder- wie der Rückseite vorstehen und so im montierten Zustand im Kontakt mit den Klemmbacken (21, 22) einen Teil der Klemmkraft elastisch aufnehmen.

12. Anordnung nach Anspruch 7-11, **dadurch gekennzeichnet, dass** die zweite Klemmvorrichtung (20) als Profilelement ausgeführt ist und die Hohlkehle (25) längsausgedehnt zwischen den Klemmbacken (21, 22) ausbildet ist, wobei das Profil einstückig oder in Segmenten zur Befestigung im Flugzeugrumpf ausgelegt ist.

13. Anordnung nach Anspruch 7-12, **dadurch gekennzeichnet, dass** in der Hohlkehle (25) zwischen den Klemmbacken (21, 22) ein Anschlagelement anbringbar ist, das die Bewegung des Wandelements (10) entlang der Längserstreckung der zweiten Klemmvorrichtung (20) begrenzt.

## Claims

1. A holding device for a plate-shaped, flat wall module (10), comprising at least one first clamping device (30) and at least one second clamping device (20), wherein the first clamping device (30) comprises a clamping body (33)
• with a first clamping jaw (31) which is fixed relative to the clamping body,
• a second clamping jaw (32) movable relative to the clamping body (33) which in turn is connected to an actuating lever (35)
- in a permanently operative manner for opening and closing the movable clamping jaw (32), or
- can be temporarily connected in such a manner that the clamping device (30) is held in the "open" state; and
- wherein in the "closed" state, the clamping jaws (31, 32) form a receiving space (36) for the wall module (10),
- and the receiving space (36) further includes an interlocking device (37) which, in the "closed" state, fixes the position of the clamping jaws (31, 32) relative to one another,
**characterized in that** the second clamping device (20) has a fork-shaped cross-sectional profile with two fixed clamping jaws (21, 22), a groove (25) formed therebetween, and a holding web (23).

2. The holding device according to claim 1, **characterized in that** the clamping jaws (31, 32) of the first clamping device (30) have damping elements (43, 44) on their surface facing the receiving space (36).

3. The holding device according to claims 1-2, **characterized in that** the interlocking device (37) of the first clamping device (30) comprises a clamping, latching, snapping, or locking device (40) on the one hand, and a latch, a mandrel (46) or pawl on the other hand, which are each positioned on one of the clamping jaws (31, 32) in such a manner that they engage in one another in an interlocking manner in the "closed" state.

4. The holding device according to claims 1-3, **characterized in that** the interlocking device (37) of the first clamping device (30) further includes a release mechanism (47).

5. The holding device according to claims 1-4, **characterized in that** the movable clamping jaw (32) of the first clamping device (30) is rotatably mounted on the clamping body (33) via a pivot axis (34).

6. The holding device according to claims 1-5, **characterized in that** the movable clamping jaw (32) of the first clamping device (30) has fastening points on its outer side (38) facing away from the receiving space for attaching elements to the outer side of the clamping jaw.

7. An arrangement, comprising an aircraft fuselage having an aircraft fuselage inner wall (11), and an aircraft cabin having a cabin interior comprising a cabin floor (14), a cabin ceiling and a cabin interior lining, the arrangement consisting of a plate-shaped, flat wall module (10) of the cabin interior lining of the aircraft cabin and a holding device according to claims 1-6, wherein the wall module (10) has a rear side (17) facing the aircraft fuselage interior wall (11) and a front side (12) facing the cabin interior, and a lower edge (13) of the wall module (10) points to the cabin floor (14) and an upper edge (15) points to the cabin ceiling.

8. The arrangement according to claim 7, **characterized in that** at least two first clamping devices (30, 30') are connected to each other by a connecting element (45) in such a manner that the clamping devices (30, 30') can be actuated together.

9. The arrangement according to claim 8, **characterized in that** the connecting element constitutes or receives a cover strip which includes lighting elements or information means such as displays, signets, illuminated information, or warning signs.

10. The arrangement according to claims 7-9, **characterized in that** the second clamping device (20) is designed in such a manner that, in the assembled state of the arrangement in the aircraft fuselage, one clamping jaw (21) points to the aircraft fuselage inner wall (11) and the other clamping jaw (22) points to the cabin interior, wherein the lower edge (13) of the wall element (10) or the lower edge (13') of a holder element (26) attached to the rear side (17) is held clamped between the two clamping jaws (21, 22) after assembly.

11. The arrangement according to claim 10, **characterized in that** the lower edge (13, 13') of the wall module (10) or of the holder element (26) comprises elastic elements which project both from the front side and from the rear side and thus, in the assembled state, elastically absorb part of the clamping force in contact with the clamping jaws (21, 22).

12. The arrangement according to claims 7-11, **characterized in that** the second clamping device (20) is configured as a profile element and the groove (25) is formed elongated between the clamping jaws (21, 22), wherein the profile is designed in one piece or in segments for fastening in the aircraft fuselage.

13. The arrangement according to claims 7-12, **characterized in that** in the groove (25) between the clamping jaws (21, 22) a stop element can be attached which limits the movement of the wall element (10) along the longitudinal extent of the second clamping device (20).

## Revendications

1. Dispositif de fixation pour un module de paroi plat, en forme de panneau (10) comprenant au moins un premier dispositif de serrage (30) et au moins un deuxième dispositif de serrage (20), sachant que le premier dispositif de serrage (30) comprend un corps de serrage (33)
• avec une première mâchoire de serrage (31) fixe par rapport au corps de serrage,
• une deuxième mâchoire de serrage (32) mobile par rapport au corps de serrage (33), qui est à nouveau reliée de façon fonctionnelle en permanence à un levier d'actionnement (35)
- pour ouvrir et fermer la mâchoire de serrage mobile (32), ou
- peut être reliée temporairement de telle manière que le dispositif de serrage (30) est maintenu à l'état « ouvert », et
- sachant qu'à l'état « fermé », les mâchoires de serrage (31, 32) constituent un espace de réception (36) pour le module de paroi (10),
- et l'espace de réception (36) comporte en plus un verrouillage (37), qui fixe à l'état « fermé » la position des mâchoires de serrage (31, 32) l'une par rapport à l'autre,
**caractérisé en ce que** le deuxième dispositif de serrage (20) comporte un profil de section en forme de fourche avec deux mâchoires de serrage fixes (21, 22), une gorge (25) constituée entre celles-ci et une nervure de fixation (23) .

2. Dispositif de fixation selon la revendication 1, **caractérisé en ce que** les mâchoires de serrage (31, 32) du premier dispositif de serrage (30) disposent d'éléments d'amortissement (43, 44) sur leur surface tournée vers le compartiment de réception (36).

3. Dispositif de fixation selon les revendications 1-2, **caractérisé en ce que** le verrouillage (37) du premier dispositif de serrage (30) comprend un dispositif de serrage, d'encliquetage, d'enclenchement ou de blocage (40) d'une part et un verrou, une broche (46) ou cliquet d'autre part, qui sont positionnés respectivement sur une des mâchoires de serrage (31, 32) de telle manière qu'à l'état « fermé », ils viennent en prise l'un dans l'autre en verrouillant.

4. Dispositif de fixation selon les revendications 1-3, **caractérisé en ce que** le verrouillage (37) du premier dispositif de serrage (30) comporte en plus un mécanisme de desserrage (47).

5. Dispositif de fixation selon les revendications 1-4, **caractérisé en ce que** la mâchoire de serrage mobile (32) du premier dispositif de serrage (30) est logée mobile en rotation sur le corps de serrage (33) par le biais d'un axe de pivotement (34).

6. Dispositif de fixation selon les revendications 1-5, **caractérisé en ce que** la mâchoire de serrage mobile (32) du premier dispositif de serrage (30) comporte sur son côté extérieur (38) opposé à l'espace de réception des points de fixation pour monter des éléments sur le côté extérieur de la mâchoire de serrage.

7. Système comprenant un fuselage d'avion, qui comporte une paroi intérieure de fuselage d'avion (11) et une cabine d'avion avec un intérieur de cabine, qui comporte un sol de cabine (14), un plafond de cabine et un habillage intérieur de cabine, le système étant composé d'un module de paroi (10) plat, en forme de panneau de l'habillage intérieur de cabine de la cabine d'avion et un dispositif de fixation selon les revendications 1-6, sachant que le module de paroi (10) comporte une face arrière (17) tournée vers la paroi intérieure de fuselage d'avion (11) et une face avant (12) tournée vers l'intérieur de cabine et un bord inférieur (13) du module de paroi (10) est tourné vers le sol de cabine (14) et un bord supérieur (15) est dirigé vers le plafond de cabine.

8. Système selon la revendication 7, **caractérisé en ce qu'**au moins deux premiers dispositifs de serrage (30, 30') sont reliés entre eux par un élément de liaison (45) de telle manière que les dispositifs de serrage (30, 30') peuvent être actionnés conjointement.

9. Système selon la revendication 8, **caractérisé en ce que** l'élément de liaison présente ou reçoit un couvre-joint, qui comporte les éléments d'éclairage ou moyens d'information comme des affichages, des logos, des symboles d'information ou d'avertissement éclairés.

10. Système selon les revendications 7-9, **caractérisé en ce que** le deuxième dispositif de serrage (20) est conçu de telle sorte qu'à l'état monté du système dans le fuselage d'avion, une mâchoire de serrage (21) est tournée vers la paroi intérieure de fuselage d'avion (11) et l'autre mâchoire de serrage (22) vers l'intérieur de cabine, sachant que le bord inférieur (13) de l'élément de paroi (10) ou le bord inférieur (13') d'un élément de fixation (26) monté sur la face arrière (17) est maintenu bloqué en serrage après montage entre les deux mâchoires de serrage (21, 22).

11. Système selon la revendication 10, **caractérisé en ce que** le bord inférieur (13, 13') du module de paroi (10) ou de l'élément de fixation (26) comprend des éléments élastiques, lesquels font saillie tant de la face avant que de la face arrière et à l'état monté en contact avec les mâchoires de serrage (21, 22), absorbent ainsi de façon élastique une partie de la force de serrage.

12. Système selon les revendications 7-11, **caractérisé en ce que** le deuxième dispositif de serrage (20) est exécuté comme un élément profilé et la gorge (25) est constituée en extension longitudinale entre les mâchoires de serrage (21, 22), sachant que le profilé est conçu en une pièce ou en segments pour fixation dans le fuselage d'avion.

13. Système selon les revendications 7-12, **caractérisé en ce qu'**entre les mâchoires de serrage (21, 22) un élément de butée peut être placé dans la gorge (25), qui limite le mouvement de l'élément de paroi (10) le long de l'extension longitudinale du deuxième dispositif de serrage (20).
